# EUROPÄISCHE PATENTSCHRIFT

(11) **EP 3 669 113 B1**
(45) Veröffentlichungstag und Bekanntmachung des Hinweises auf die Patenterteilung: **21.01.2026**
(21) Anmeldenummer: 18752438.4
(22) Anmeldetag: 02.08.2018
(51) Int. Cl.: F17C 5/00, F17C 13/08, B60K 15/07

(54) **ANHÄNGER MIT EINEM HOCHDRUCKTANK ZUM TRANSPORT EINES GASFÖRMIGEN UND/ODER FLÜSSIGEN TREIBSTOFFS, SYSTEM AUS ANHÄNGER UND ZUGFAHRZEUG, VERFAHREN ZUM BETANKEN DES HOCHDRUCKTANKS SOWIE STEUEREINRICHTUNG**
TRAILER COMPRISING A HIGH-PRESSURE TANK FOR TRANSPORTING A GASEOUS AND/OR LIQUID FUEL, SYSTEM OF TRAILER AND TRACTION VEHICLE, METHOD FOR FILLING THE HIGH-PRESSURE TANK, AND CONTROL DEVICE
REMORQUE COMPRENANT UN RÉSERVOIR HAUTE PRESSION POUR LE TRANSPORT D'UN CARBURANT GAZEUX ET/OU LIQUIDE, SYSTÈME COMPOSÉ D'UNE REMORQUE ET D'UN VÉHICULE TRACTEUR, PROCÉDÉ DE REMPLISSAGE DU RÉSERVOIR HAUTE PRESSION ET DISPOSITIF DE COMMANDE ASSOCIÉ

(30) Priorität: 15.08.2017 DE 102017214184
(43) Veröffentlichungstag der Anmeldung: 24.06.2020
(73) Patentinhaber: Robert Bosch GmbH, 70442 Stuttgart (DE)
(72) Erfinder: KEMMER, Helerson, 71665 Vaihingen (DE); WEEBER, Kai, 71296 Heimsheim (DE)
(86) Internationale Anmeldenummer: PCT/EP2018/070986
(87) Internationale Veröffentlichungsnummer: WO 2019/034440

(56) Entgegenhaltungen:
- EP-A1- 1 391 599
- WO-A1-2010/077187
- DE-A1- 102011 056 921
- DE-A1- 102013 110 203

## Beschreibung

Die Erfindung betrifft einen Anhänger zum Transportieren eines Ladeguts und zum Mitführen durch ein Zugfahrzeug mit einem Hochdrucktank zum Transport eines gasförmigen und/oder flüssigen Treibstoffs für das Zugfahrzeug sowie ein System aus einem Anhänger und einem Zugfahrzeug.

### Stand der Technik

Aus der DE 100 19 221 A1 ist ein Zusatz-Tank-System offenbart, welches mit geringem Aufwand bei Diesel-Fahrzeugen nachgerüstet werden kann.

Die EP 1 391 599 A1 beschreibt ein System mit einem Brennstofftank und einem Verteilersystem.

Die DE 10 2011 056921 A1 beschreibt ein Nutzfahrzeuganhänger für Straßenfahrzeuge mit einem Fahrzeugrahmen und einem Fahrgestell, wobei der Fahrzeugrahmen unterhalb der Ladefläche eine Speichereinrichtung aufweist.

Die DE 10 2013 110203 A1 beschreibt ein Tankmodul für einen Fahrzeuganhänger mit einem Gastank.

Die WO 2010/077187 A1 beschreibt einen Anhänger für ein Fahrzeug mit einem an dem Anhänger angeordneten Tank.

### Offenbarung der Erfindung

Vor diesem Hintergrund werden mit dem hier vorgestellten Ansatz ein Anhänger zum Transportieren eines Ladeguts und zum Mitführen durch ein Zugfahrzeug aufweisend wenigstens einen Hochdrucktank zum Transport eines gasförmigen und/oder flüssigen Treibstoffs für das Zugfahrzeug vorgestellt, wobei der Anhänger dazu eingerichtet ist, den gasförmigen und/oder flüssigen Treibstoff in dem Hochdrucktank einer Antriebseinheit des Zugfahrzeugs während eines Betriebs des Zugfahrzeugs bereitzustellen. Dies hat den Vorteil, dass eine Reichweite des Zugfahrzeugs hierdurch abhängig von einer Anzahl an mitgeführten Hochdrucktanks und/oder von einem Volumen des/der mitgeführten Hochdrucktanks vergrößert werden kann. Darüber hinaus weist der Hochdrucktank einen Sensor auf, der einen Füllstand des Hochdrucktanks repräsentierenden Messwert erfasst, wobei eine Steuereinrichtung an dem Zugfahrzeug angeordnet werden kann oder an dem Anhänger angeordnet ist, welche Steuereinrichtung signaltechnisch mit dem Sensor verbunden ist und welche Steuereinrichtung eine Kommunikationsschnittstelle aufweist, mit welcher Kommunikationsschnittstelle eine signaltechnische Verbindung zu einer nächsten Tankstelle aufnehmbar ist. Weiterhin weist die Steuereinrichtung (50) eine Recheneinheit (52) auf, welche Recheneinheit (52) Sensordaten (P) mit einem in einer Speichereinheit (53) abgelegten, zuvor eingestellten Schwellenwert vergleicht.

Dies ist insbesondere dann von Vorteil, wenn eine Tankstellen-Infrastruktur für den jeweils mitgeführten und von dem Zugfahrzeug zum Antrieb seiner Antriebseinheit verwendeten Treibstoff schlecht ausgebaut ist und große Distanzen zwischen einzelnen Tankstellen überbrückt werden müssen.

Unter einem Anhänger kann hierbei ein Fahrzeug ohne eigenen Antrieb verstanden werden, das eine Vorrichtung zur Aufnahme von zu transportierenden Gütern sowie eine Kupplung zum Anhängen an ein Zugfahrzeug aufweist. Die Vorrichtung zur Aufnahme von zu transportierenden Gütern kann beispielsweise als eine Ladefläche ausgebildet sein. Unter einem Zugfahrzeug kann ein ziehendes Fahrzeug in einem Gespann oder Sattelzug verstanden werden. Insbesondere kann das Zugfahrzeug als ein Personenkraftwagen, ein Lastkraftwagen oder ein Sattelzug ausgestaltet sein.

Unter einem Hochdrucktank kann ein Tank verstanden werden, der gasförmigen und/oder flüssigen Treibstoff bei einem Druck von 350 bar, bevorzugt von 700 bar und besonders bevorzugt von 1000 bar, speichern kann. Der Hochdrucktank kann beispielsweise als zylinderförmiger Drucktank ausgeführt sein. Der Hochdrucktank kann hierbei eine Länge von beispielsweise ca. 6,5 m und einen Innendurchmesser von ca. 0,4 m aufweisen. Der Hochdrucktank kann sowohl längs oder quer zu einer längsten Seite des Anhängers ausgerichtet bzw. angeordnet sein. Weiterhin kann in dem Hochdrucktank der Treibstoff auch bei Normaldruck gespeichert werden. Dies kann insbesondere bei herkömmlichen Motorenkraftstoffen wie Benzin oder Diesel der Fall sein.

Indem der Hochdrucktank unterhalb der Ladefläche des Anhängers angeordnet ist, wird die nutzbare Ladefläche des Anhängers durch das Volumen des Hochdrucktanks nicht verkleinert. Vielmehr kann der Hochdrucktank dadurch einen ohnehin schwer nutzbaren Bauraum des Anhängers wenigstens teilweise ausfüllen. Ferner wird hierdurch der Schwerpunkt des Anhängers vorteilhafterweise nach unten in Richtung Fahrbahn verlagert.

Es ist zweckmäßig, wenn der Hochdrucktank zwischen zwei Achsen des Anhängers und/oder zwischen zwei Reifen des Anhängers angeordnet ist. Denn hierdurch kann der Bauraum des Anhängers optimal ausgenutzt werden. Ferner ist der Hochdrucktankdurch diese Art der Anordnung leicht zugänglich, was Wartungsarbeiten erleichtert.

Weiterhin ist es von Vorteil, wenn der Hochdrucktank dazu eingerichtet ist, gasförmigen und/oder flüssigen Wasserstoff aufzunehmen. Denn hierdurch kann der Anhänger einen umweltfreundlichen Treibstoff mitführen, der beispielsweise mittels einer Brennstoffzelle unter Hinzunahme von Sauerstoff aus einer Umgebungsluft des Anhängers zur Erzeugung von elektrischer Energie genutzt werden kann.

In einer weiteren Ausgestaltungsform der Erfindung kann vorgesehen sein, dass der Anhänger einen Druckminderer zum Angleichen eines Drucks des Treibstoffs in dem Hochdrucktank an einen Druck des Treibstoffs in einer Niederdruckschlauchverbindung zur Bereitstellung des Treibstoffs an die Antriebseinheit des Zugfahrzeugs aufweist. Denn hierdurch kann der Treibstoff effektiv an Spezifikationen der Antriebseinheit des Zugfahrzeugs angepasst werden.

Es ist weiterhin von Vorteil, wenn der Anhänger wenigstens eine erste Schnittstelle zum Entnehmen des Treibstoffs aus dem Hochdrucktank und/oder wenigstens eine zweite Schnittstelle zum Befüllen des Hochdrucktanks mit Treibstoff aufweist. Denn hierdurch kann der Hochdrucktank die Antriebseinheit des Zugfahrzeugs über die erste Schnittstelle weiter mit Treibstoff versorgen, während der Hochdrucktank über die zweite Schnittstelle betankt wird. Alternativ kann vorgesehen sein, dass die erste Schnittstelle auch zu einer Befüllung des Hochdrucktanks ausgelegt ist.

Weiterhin wird mit dem hier dargelegten Ansatz ein System mit einem Anhänger, insbesondere nach einer der vorangehenden Ausführungen, und mit einem Zugfahrzeug vorgestellt, wobei eine Antriebseinheit des Zugfahrzeugs durch einen in einem Hochdrucktank in dem Anhänger gelagerten Treibstoff während eines Betriebs des Zugfahrzeugs angetrieben wird. Dies hat den Vorteil, dass eine Reichweite des Zugfahrzeugs erhöht werden kann und kein Anhalten mehr notwendig ist, um beispielsweise Treibstoff von dem Hochdrucktank in dem Anhänger in einen fahrzeugeigenen Tank des Zugfahrzeugs zu pumpen.

Es ist ferner von Vorteil, wenn in dem System die Antriebseinheit des Zugfahrzeugs eine Brennstoffzelle zur Bereitstellung von elektrischer Energie und einen Elektromotor zur Wandlung der elektrischen Energie in mechanische Energie aufweist. Denn hierdurch kann ein besonders umweltfreundliches und ressourcenschonendes Transportsystem realisiert werden.

Weiterhin ist ein nicht erfindungsgemäßes Verfahren zum Betanken eines Hochdrucktanks in einem System, insbesondere nach einem zuvor beschriebenen System beschrieben. Das Verfahren enthält die Schritte des Ermittelns eines Füllstandes eines Treibstoffs in dem Hochdrucktank durch einen Füllstandssensor, des Prüfens, ob der ermittelte Füllstand kleiner oder gleich einem einstellbaren Schwellenwert ist durch eine Steuereinrichtung, des Aufnehmens einer Kommunikationsverbindung mit einer Tankstelle durch eine Kommunikationsschnittstelle zur Bereitstellung einer zu tankenden Treibstoffmenge, wenn der Prüfschritt positiv ausfällt, sowie des Andockens an eine Tankeinrichtung zur, insbesondere automatischen, Betankung des Hochdrucktanks. Der Schritt des Andockens kann hierbei beispielsweise automatisch durch eine Andockvorrichtung erfolgen.

Neben den zuvor beschriebenen Vorteilen hat das Verfahren den Vorteil, dass ein Betankungsvorgang weitgehend automatisch durchgeführt werden kann. Insbesondere bei gasförmigen und/oder flüssigen Treibstoffen, die unter Hochdruck getankt bzw. in einem Hochdrucktank gespeichert werden, wird hierdurch die Gefahr eines Personenschadens minimiert. Des Weiteren spart ein weitgehend automatisierter Betankungsvorgang auch Zeit.

Die zuvor genannten Vorteile gelten in entsprechender Weise auch für eine Steuereinrichtung mit Mitteln zur Durchführung des Verfahrens.

### Ausführungsbeispiele der Erfindung

Ausführungsbeispiele der Erfindung sind in den Zeichnungen dargestellt und in der nachfolgenden Beschreibung näher erläutert.

Es zeigen:
- Fig. 1: eine schematische Darstellung eines Systems aus einem Anhänger zum Transportieren eines Ladeguts und zum Mitführen durch ein Zugfahrzeug mit längs liegenden Hochdrucktanks und einem Zugfahrzeug in einer Seitenansicht und einer Draufsicht,
- Fig. 2: eine schematische Darstellung eines alternativen Systems aus einem Anhänger mit quer liegenden Hochdrucktanks und einem Zugfahrzeug in einer Seitenansicht,
- Fig. 3: ein Ablaufdiagramm eines Verfahrens zum Betanken eines Hochdrucktanks in einem System aus Anhänger und Zugfahrzeug, sowie
- Fig. 4: eine schematische Darstellung einer Steuereinrichtung zur Durchführung des Verfahrens.

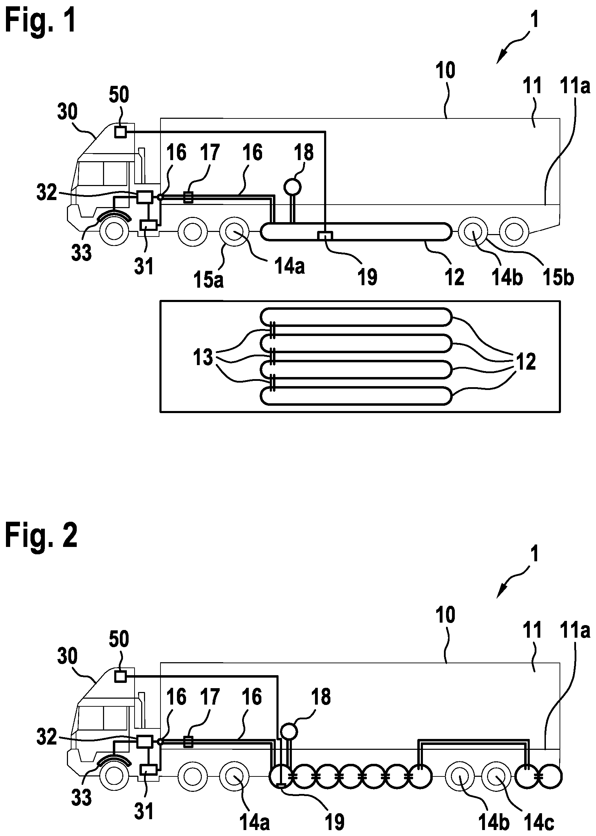

In Fig. 1 ist ein System 1 aus einem Anhänger 10 und einem Zugfahrzeug 30 dargestellt. Das Zugfahrzeug 30 ist als Sattelschlepper 30 und der Anhänger 10 als Auflieger 10 ausgestaltet. Der Sattelschlepper 30 weist einen fahrzeugeigenen Hochdrucktank 31 auf, über den eine Antriebseinheit des Sattelschleppers 30 mit Treibstoff versorgt wird. Der fahrzeugeigene Hochdrucktank 31 weist hierbei eine Kapazität auf, die einen Notbetrieb der Antriebseinheit des Sattelschleppers 30 erlaubt, beispielsweise um ohne Auflieger 10 eine nächste Tankstelle zu erreichen. In einer bevorzugten Ausführungsform der Erfindung weist die Antriebseinheit des Sattelschleppers eine Brennstoffzelle 32 und einen Elektromotor 33 auf. Der Elektromotor 33 wird hierbei durch die Brennstoffzelle 32 mit elektrischer Energie versorgt. Die Brennstoffzelle 32 wird durch den fahrzeugeigenen Hochdrucktank 31 beispielsweise mit Wasserstoff oder Methan sowie in einer Umgebungsluft des Sattelschleppers 30 vorhandenen Sauerstoff gespeist.

In einer alternativen Ausgestaltungsform der Erfindung kann der Sattelschlepper 30 als Antriebseinheit einen Verbrennungsmotor aufweisen, welcher mit dem in gasförmiger und/oder flüssiger Form in dem fahrzeugeigenen Hochdrucktank 31 vorliegenden Treibstoffs gespeist wird. Der Verbrennungsmotor kann beispielsweise als ein Gasmotor ausgestaltet sein, der z.B. mit Erd-, Flüssig-, Holz-, Bio-, Deponie-, Grubengase, Gichtgas oder Wasserstoff angetrieben wird.

Der Auflieger 10 weist einen Laderaum 11 mit einer Ladefläche 11a auf, welcher zum Transport von Transportgütern genutzt werden kann. Unterhalb des Laderaums 11 bzw. der Ladefläche 11a sind mehrere Hochdrucktanks 12 angeordnet, welche über Leitungen 13 miteinander fluidverbunden sind. Die Hochdrucktanks 12 sind derart ausgelegt, dass sie mit gasförmigem und/oder flüssigem Treibstoff, insbesondere mit Wasserstoff, befüllt werden können. Der Treibstoff, insbesondere der Wasserstoff, wird hierbei zum Betreiben der Brennstoffzelle 32 des Sattelschleppers 30 genutzt, um dessen Reichweite zu erhöhen. Die Hochdrucktanks 12 weisen in dieser Ausführungsform der Erfindung eine zylindrische Form auf, wobei eine Längsachse der Hochdrucktanks 12 parallel zu einer Fahrzeuglängsachse angeordnet ist. Die Hochdrucktanks können hierbei insbesondere zwischen Achsen 14a, 14b des Aufliegers 10 angeordnet sein. Weiterhin können die Hochdrucktanks zwischen Reifen 15a, 15b des Aufliegers 10 angeordnet sein.

Die Hochdrucktanks 12 können beispielsweise eine Länge von ca. 6,5 m und einen Innendurchmesser von ca. 0,4 m aufweisen. Bei einem Volumen eines Hochdrucktanks 12 von ca. 815 I ergibt sich bei vier unter dem Auflieger 10 angeordneten Hochdrucktanks 12 ein gesamtes Speichervolumen von ca. 3280 I. Bei einem Druck von ca. 700 bar lassen sich so ca. 180 kg Wasserstoff speichern. Diese Menge an Wasserstoff reicht aus, um das System 1 aus Sattelschlepper 30 und Auflieger 30 bei einem ausgenutzten zulässigen Gesamtgewicht von ca. 40 t mit einer Reichweite von ca. 2200 km auszustatten. Bei einem Druck von ca. 350 bar entspräche die Reichweite des Systems 1 immer noch ca. 1100 km.

Der Auflieger 10 weist weiterhin eine erste Schnittstelle 16 auf, die mit dem Hochdrucktank 12 fluidverbunden ist und über welche die Brennstoffzelle 32 des Sattelschleppers 30 mit Wasserstoff gespeist werden kann. Hierbei kann die Brennstoffzelle 32 direkt mit der Schnittstelle 16 fluidverbunden sein. Alternativ oder zusätzlich kann der fahrzeugeigene Hochdrucktank 31 mit der Schnittstelle 16 fluidverbunden sein.

Ferner kann der Anhänger 10 einen Druckminderer 17 aufweisen, mit welchem der Druck des Wasserstoffs in dem Hochdrucktank 12 an einen Betriebsdruck der Brennstoffzelle 32 angeglichen werden kann.

Weiterhin weist der Anhänger 10 eine zweite Schnittstelle 18 auf, über die der Hochdrucktank 12 befüllt werden kann. In einer alternativen Ausführungsform der Erfindung können mehrere der Hochdrucktanks 12 eine eigene, zweite Schnittstelle 18 zur Betankung bzw. zur Befüllung aufweisen.

Ferner weisen die Hochdrucktanks 12 einen Sensor 19 auf, der einen einen Füllstand der Hochdrucktanks 12 repräsentierenden Messwert erfasst. Bevorzugt ist der Sensor 19 als Drucksensor ausgestaltet.

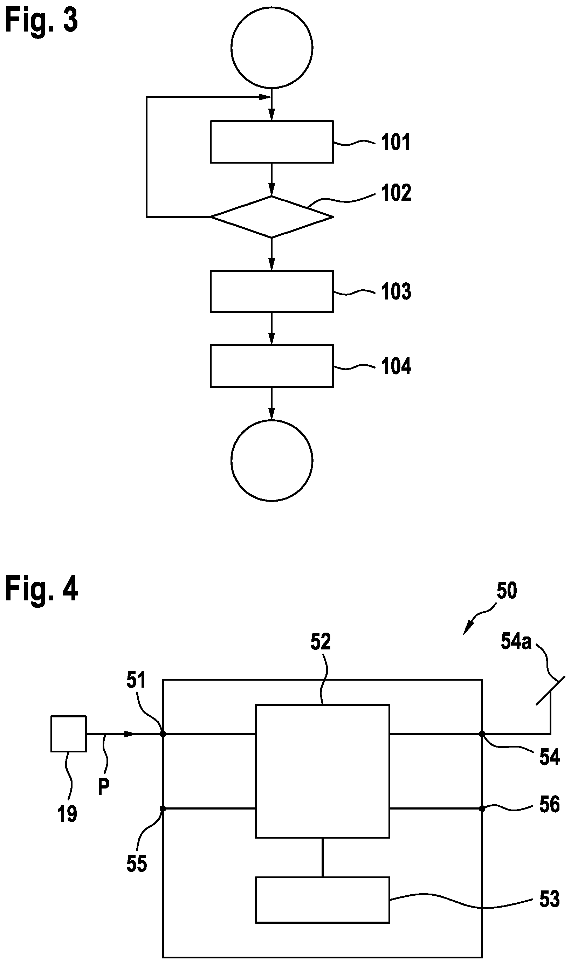

Des Weiteren weist das System 1 eine Steuereinrichtung 50 auf, die sowohl an dem Sattelschlepper 30 als auch an dem Auflieger 10 angeordnet sein kann. Die Steuereinrichtung 50 ist mit dem Sensor 19 signaltechnisch verbunden. Die Steuereinrichtung 50 wird bei der Beschreibung der Fig. 4 näher erläutert.

In Fig. 2 ist eine alternative Ausführungsform des Systems 1 aus Fig. 1 gezeigt. Der Unterschied zu dem System 1 aus Fig. 1 besteht in der Anordnung der Hochdrucktanks 12. Hierbei sind die Hochdrucktanks 12 mit ihrer Längsachse quer zu der Fahrzeuglängsachse angeordnet.

Die Hochdrucktanks 12 können beispielsweise eine Länge von ca. 2 m und einen Innendurchmesser von ca. 0,4 m aufweisen. Bei einem Volumen eines Hochdrucktanks 12 von ca. 250 I ergeben sich bei 13 unter dem Auflieger 10 zwischen den Achsen 14a, 14b und weiteren zwei hinter einer Achse 14c angeordneten Hochdrucktanks 12 ein gesamtes Speichervolumen von ca. 3250 I und damit ein ähnliches Volumen wie aus dem Beispiel in Fig. 1. Bei einem Druck von ca. 700 bar lassen sich so ca. 180 kg Wasserstoff speichern. Diese Menge an Wasserstoff reicht aus, um das System 1 aus Sattelschlepper 30 und Auflieger 30 bei einem ausgenutzten zulässigen Gesamtgewicht von ca. 40 t mit einer Reichweite von ca. 2200 km auszustatten. Bei einem Druck von ca. 350 bar entspräche die Reichweite des Systems 1 immer noch ca. 1100 km.

In Fig. 3 ist ein Ablaufdiagramm eines Verfahrens zum Betanken eines Hochdrucktanks 12 in einem System 1 aus Anhänger und Zugfahrzeug gezeigt. In einem Ermittlungsschritt 101 wird ein Füllstand des Treibstoffs, insbesondere des Wasserstoffs, in dem Hochdrucktank 12 erfasst. Dies geschieht beispielsweise durch einen Sensor 19, welcher einen den Füllstand des Hochdrucktanks 12 repräsentierenden Innendruck P des Treibstoffs in dem Hochdrucktank 12 erfasst und an eine Steuereinrichtung 50 signaltechnisch übermittelt. Der Ermittlungsschritt 101 kann hierbei automatisch und wiederholend durchgeführt werden. Alternativ oder zusätzlich ist es möglich, dass der Ermittlungsschritt 101 durch einen Fahrer des Sattelzugs 30 ausgelöst wird. In einem Prüfschritt 102 wird geprüft, ob der Innendruck P kleiner oder gleich einem voreingestellten Schwellwert ist. Ist dies nicht der Fall, so kann der Ermittlungsschritt 101 wiederholt werden. Ist der Innendruck P kleiner oder gleich dem voreingestellten Schwellwert, so erfolgt in einem Kommunikationsschritt 103 die Aufnahme einer Kommunikationsverbindung mit einer nächstgelegenen Tankstelle. Hierbei können beispielsweise Daten über ein Gewicht und/oder Abmessungen des Sattelschleppers 30, Daten über eine gewünschte, zu tankende Treibstoffmenge und/oder Daten von Spezifikationen des Hochdrucktanks 12 übermittelt werden. Hierdurch ist die Tankstelle bzw. der Tankstellenbetreiber in der Lage, einen Betankungsvorgang vorzubereiten und eine gewünschte Menge an Treibstoff bereitzustellen. Ferner können so geforderte Parameter des Betankungsvorgangs, wie beispielsweise ein Betankungsdruck, voreingestellt werden. Nun erfolgt in einem Andockungsschritt 104 ein Andocken einer zweiten Schnittstelle 18 des Aufliegers 10 an eine Tankeinrichtung zur Betankung des Hochdrucktanks 12 mit den zuvor übermittelten Parametern für den Betankungsvorgang. Der Andockungsvorgang kann automatisch gesteuert erfolgen, indem der Sattelschlepper 30 an die Tankstelle heranfährt und die Tankeinrichtung selbsttätig oder manuell ferngesteuert eine sichere Verbindung über die zweite Schnittstelle 18 mit dem Hochdrucktank 12 eingeht. Es ist auch möglich, dass der Fahrer die Tankeinrichtung manuell mit der zweiten Schnittstelle 18 verbindet.

In Fig. 4 ist eine schematische Darstellung einer Steuereinrichtung 50 zur Durchführung des Verfahrens zum Betanken eines Hochdrucktanks 12 in einem System 1 dargestellt. Die Steuereinrichtung 50 weist eine Schnittstelle 51 auf, über welche einen Füllstand eines Hochdrucktanks 12 repräsentierende, durch einen Sensor 19 erfasste Sensordaten P eingelesen werden. Weiterhin weist die Steuereinrichtung 50 eine Recheneinheit 52 auf, welche die Sensordaten P mit einem in einer Speichereinheit 53 abgelegten, zuvor eingestellten Schwellenwert vergleicht. Ferner weist die Steuereinrichtung 50 eine Kommunikationsschnittstelle 54 auf, mit welcher die Steuereinrichtung 50 z.B. eine signaltechnische Verbindung zu einer nächsten Tankstelle aufnehmen kann. Dies kann über eine drahtlose Kommunikationsschnittstelle 54a wie beispielsweise einer Antenne zur Ausbildung einer Funkverbindung erfolgen. Die Steuereinrichtung 50 kann in einem fahrzeugeigenen Bus-System, wie beispielsweise CAN-Bus, eingebettet sein und weitere Schnittstellen 55, 56 zum Empfangen und/oder Versenden von Daten aufweisen. Die Steuereinrichtung 50 kann sowohl in oder an dem Sattelschlepper 30 als auch in oder an dem Auflieger 10 angeordnet sein.

## Patentansprüche

1. Anhänger (10) zum Transportieren eines Ladeguts und zum Mitführen durch ein Zugfahrzeug (30) aufweisend wenigstens einen Hochdrucktank (12) zum Transport eines gasförmigen und/oder flüssigen Treibstoffs für das Zugfahrzeug(30), wobei der Anhänger (10) dazu eingerichtet ist, den gasförmigen und/oder flüssigen Treibstoff in dem Hochdrucktank (12) einer Antriebseinheit (32, 33) des Zugfahrzeugs (30) während eines Betriebs des Zugfahrzeugs (30) bereitzustellen, **dadurch gekennzeichnet, dass** der Hochdrucktank (12) einen Sensor (19) aufweist, der einen Füllstand des Hochdrucktanks (12) repräsentierenden Messwert erfasst, wobei eine Steuereinrichtung (50) an dem Zugfahrzeug (30) angeordnet werden kann oder an dem Anhänger (10) angeordnet ist, welche Steuereinrichtung (50) signaltechnisch mit dem Sensor (19) verbunden ist, welche Steuereinrichtung (50) eine Kommunikationsschnittstelle (54) aufweist, mit welcher Kommunikationsschnittstelle (54) eine signaltechnische Verbindung zu einer nächsten Tankstelle aufnehmbar ist und welche Steuereinrichtung (50) eine Recheneinheit (52) aufweist, welche Recheneinheit (52) Sensordaten (P) mit einem in einer Speichereinheit (53) abgelegten, zuvor eingestellten Schwellenwert vergleicht.

2. Anhänger (10) nach Anspruch 1, **dadurch gekennzeichnet, dass** der Hochdrucktank (12) unterhalb einer Ladefläche (11a) des Anhängers (10) angeordnet ist.

3. Anhänger (10) nach Anspruch 1 oder 2, **dadurch gekennzeichnet, dass** der Hochdrucktank (12) zwischen zwei Achsen (14a, 14b) des Anhängers (10) und/oder zwischen zwei Reifen (15a, 15b) des Anhängers (10) angeordnet ist.

4. Anhänger (10) nach einem der Ansprüche 1 bis 3, **dadurch gekennzeichnet, dass** der Hochdrucktank (12) dazu eingerichtet ist, gasförmigen und/oder flüssigen Wasserstoff aufzunehmen.

5. Anhänger (10) nach einem der vorhergehenden Ansprüche, **dadurch gekennzeichnet, dass** der Anhänger (10) einen Druckminderer (17) zum Angleichen eines Drucks des Treibstoffs in dem Hochdrucktank (12) an einen Druck des Treibstoffs in einer Niederdruckschlauchverbindung zur Bereitstellung des Treibstoffs an die Antriebseinheit (32, 33) des Zugfahrzeugs (30) aufweist.

6. Anhänger (10) nach einem der vorhergehenden Ansprüche, **dadurch gekennzeichnet, dass** der Anhänger (10) wenigstens eine erste Schnittstelle (16) zum Entnehmen des Treibstoffs aus dem Hochdrucktank (12) und/oder wenigstens eine zweite Schnittstelle (18) zum Befüllen des Hochdrucktanks (12) mit Treibstoff aufweist.

7. System (1) mit einem Anhänger (10) nach einem der Ansprüche 1 bis 6 und mit einem Zugfahrzeug (30), **dadurch gekennzeichnet, dass** eine Antriebseinheit (32, 33) des Zugfahrzeugs durch einen in einem Hochdrucktank (12) in dem Anhänger (10) gelagerten Treibstoff während eines Betriebs des Zugfahrzeugs (30) angetrieben wird.

8. System (1) nach Anspruch 7 **dadurch gekennzeichnet, dass** die Antriebseinheit (32, 33) des Zugfahrzeugs (30) eine Brennstoffzelle (32) zur Bereitstellung von elektrischer Energie und einen Elektromotor (33) zur Wandlung der elektrischen Energie in mechanische Energie aufweist.

## Claims

1. Trailer (10) for transporting a cargo and for being towed by a tractor vehicle (30), having at least one high-pressure tank (12) for transporting a gaseous and/or liquid fuel for the tractor vehicle (30), wherein the trailer (10) is designed to provide the gaseous and/or liquid fuel in the high-pressure tank (12) to a drive unit (32, 33) of the tractor vehicle (30) during operation of the tractor vehicle (30), **characterized in that** the high-pressure tank (12) has a sensor (19) which detects a measurement value representing a filling level of the high-pressure tank (12), wherein a control device (50) can be arranged on the tractor vehicle (30) or is arranged on the trailer (10), which control device (50) is connected in a signal-transmitting manner to the sensor (19), which control device (50) has a communication interface (54), with which communication interface (54) a signal-transmitting connection to a next filling station can be established, and which control device (50) has a computing unit (52), which computing unit (52) compares sensor data (P) with a previously set threshold value stored in a memory unit (53).

2. Trailer (10) according to Claim 1, **characterized in that** the high-pressure tank (12) is arranged below a loading surface (11a) of the trailer (10).

3. Trailer (10) according to Claim 1 or 2, **characterized in that** the high-pressure tank (12) is arranged between two axles (14a, 14b) of the trailer (10) and/or between two tyres (15a, 15b) of the trailer (10).

4. Trailer (10) according to any of Claims 1 to 3, **characterized in that** the high-pressure tank (12) is designed to receive gaseous and/or liquid hydrogen.

5. Trailer (10) according to any of the preceding claims, **characterized in that** the trailer (10) has a pressure reducer (17) for equalizing a pressure of the fuel in the high-pressure tank (12) with a pressure of the fuel in a low-pressure hose connection for providing the fuel to the drive unit (32, 33) of the tractor vehicle (30).

6. Trailer (10) according to any of the preceding claims, **characterized in that** the trailer (10) has at least one first interface (16) for removing the fuel from the high-pressure tank (12) and/or at least one second interface (18) for filling the high-pressure tank (12) with fuel.

7. System (1) comprising a trailer (10) according to any of Claims 1 to 6 and comprising a tractor vehicle (30), **characterized in that** a drive unit (32, 33) of the tractor vehicle is powered by a fuel stored in a high-pressure tank (12) in the trailer (10) during operation of the tractor vehicle (30).

8. System (1) according to Claim 7, **characterized in that** the drive unit (32, 33) of the tractor vehicle (30) has a fuel cell (32) for providing electrical energy and an electric motor (33) for converting the electrical energy into mechanical energy.

## Revendications

1. Remorque (10) destinée au transport d'une charge et à être tractée par un véhicule tracteur (30), présentant au moins un réservoir haute pression (12) destiné au transport d'un carburant gazeux et/ou liquide pour le véhicule tracteur (30), la remorque (10) étant adaptée pour fournir le carburant gazeux et/ou liquide dans le réservoir haute pression (12) d'une unité d'entraînement (32, 33) du véhicule tracteur (30) pendant un fonctionnement du véhicule tracteur (30), **caractérisé en ce que** le réservoir haute pression (12) présente un capteur (19) qui détecte une valeur de mesure représentant un niveau de remplissage du réservoir haute pression (12), un appareil de commande (50) pouvant être agencé sur le véhicule tracteur (30) ou étant agencé sur la remorque (10), lequel appareil de commande (50) est relié pour la transmission de signaux au capteur (19), lequel appareil de commande (50) présente une interface de communication (54), interface de communication (54) avec laquelle une liaison pour la transmission de signaux peut être établie avec une station-service suivante, et lequel appareil de commande (50) présente une unité de calcul (52), laquelle unité de calcul (52) compare des données de capteur (P) à une valeur seuil ajustée auparavant enregistrée dans une unité de mémoire (53).

2. Remorque (10) selon la revendication 1, **caractérisée en ce que** le réservoir haute pression (12) est agencé sous une surface de chargement (11a) de la remorque (10).

3. Remorque (10) selon la revendication 1 ou 2, **caractérisée en ce que** le réservoir haute pression (12) est agencé entre deux essieux (14a, 14b) de la remorque (10) et/ou entre deux roues (15a, 15b) de la remorque (10).

4. Remorque (10) selon l'une quelconque des revendications 1 à 3, **caractérisée en ce que** le réservoir haute pression (12) est adapté pour recevoir de l'hydrogène gazeux et/ou liquide.

5. Remorque (10) selon l'une quelconque des revendications précédentes, **caractérisée en ce que** la remorque (10) présente un réducteur de pression (17) pour ajuster une pression du carburant dans le réservoir haute pression (12) à une pression du carburant dans un raccord de tuyau basse pression afin de fournir le carburant à l'unité d'entraînement (32, 33) du véhicule tracteur (30).

6. Remorque (10) selon l'une quelconque des revendications précédentes, **caractérisée en ce que** la remorque (10) présente au moins une première interface (16) pour prélever le carburant du réservoir haute pression (12) et/ou au moins une deuxième interface (18) pour remplir le réservoir haute pression (12) avec du carburant.

7. Système (1) comprenant une remorque (10) selon l'une quelconque des revendications 1 à 6 et un véhicule tracteur (30), **caractérisé en ce qu'**une unité d'entraînement (32, 33) du véhicule tracteur est entraînée par un carburant stocké dans un réservoir haute pression (12) dans la remorque (10) pendant le fonctionnement du véhicule tracteur (30).

8. Système (1) selon la revendication 7, **caractérisé en ce que** l'unité d'entraînement (32, 33) du véhicule tracteur (30) présente une pile à combustible (32) pour fournir de l'énergie électrique et un moteur électrique (33) pour convertir l'énergie électrique en énergie mécanique.
